(19) Europäisches Patentamt
European Patent Office
Office européen des brevets

(11) **EP 2 167 276 B1**

(12) **EUROPÄISCHE PATENTSCHRIFT**

(45) Veröffentlichungstag und Bekanntmachung des Hinweises auf die Patenterteilung:
**26.01.2011 Patentblatt 2011/04**

(21) Anmeldenummer: 08773507.2

(22) Anmeldetag: **19.06.2008**

(51) Int Cl.:
***B23Q 17/00*** *(2006.01)*

(86) Internationale Anmeldenummer:
**PCT/EP2008/004917**

(87) Internationale Veröffentlichungsnummer:
**WO 2009/006982 (15.01.2009 Gazette 2009/03)**

(54) **VERFAHREN ZUR BETÄTIGUNG EINER SPANNVORRICHTUNG UND SPANNSYSTEM ZUR DURCHFÜHRUNG DES VERFAHRENS**

METHOD FOR ACTUATING A TENSIONING APPARATUS, AND TENSIONING SYSTEM FOR CARRYING OUT THE METHOD

PROCÉDÉ POUR ACTIONNER UN DISPOSITIF DE SERRAGE ET SYSTÈME DE SERRAGE POUR METTRE EN OEUVRE CE PROCÉDÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.07.2007 DE 102007032416
11.10.2007 EP 07019880**

(43) Veröffentlichungstag der Anmeldung:
**31.03.2010 Patentblatt 2010/13**

(73) Patentinhaber: **Röhm GmbH
89567 Sontheim/Brenz (DE)**

(72) Erfinder:
• **SPEER, Rolf
73527 Schwäbisch Gmünd (DE)**
• **VETTER, Thomas
73547 Lorch (DE)**

(74) Vertreter: **Hentrich, Swen
Patentanwalt
Syrlinstrasse 35
89073 Ulm (DE)**

(56) Entgegenhaltungen:
**WO-A-99/51380       WO-A-2006/030520
DE-A1- 3 546 252     DE-C1- 4 322 317
US-A- 4 567 794      US-A1- 2003 014 860**

**Beschreibung**

Die Erfindung betrifft ein Verfahren zur Betätigung einer Spannvorrichtung sowie ein Spannsystem zur Durchführung des Verfahrens gemäss dem Oberbegriff des Anspruchs 1 bzw. 15 (siehe. z.B., US 2003/0014860).

Spannsysteme mit Spannvorrichtungen werden in unterschiedlichen Ausbildungen eingesetzt um Werkzeuge, wie zum Beispiel Bohrer oder Fräser, zu spannen. Die Spannvorrichtungen, die dazu dienen, ein Werkzeug in einer Werkzeugaufnahme zu spannen, bestehen typischerweise aus einer Spannzange oder einem Spannsatz aus Spannelementen, die über den Umfang der Werkzeugaufnahme verteilt angeordnet sind. Weiterhin dienen Spannvorrichtungen der in Rede stehenden Art zum Spannen von Werkstücken.

Die Spannvorrichtungen werden üblicherweise über mechanische Stellelementen geöffnet oder geschlossen. Beispielsweise werden bei Spannvorrichtungen in Form von Spannzangen diese üblicherweise in einer axial beweglichen Zangenhalterung gelagert und können dann durch einen axial verschiebbaren kegelförmigen Spannstab betätigt, das heißt bewegt werden Die notwendigen Spannkräfte zum Spannen des Werkzeugs werden dabei von Federpaketen aufgebracht, die den kegelförmigen Spannstab gegen die Spannzangen drükken. Das Lösen des Werkzeugs aus der Spannvorrichtung erfolgt dann hydraulisch, indem die Spannzangen mittels einer Hydraulikeinheit gegen die Federkräfte der Federpakete zurückgeschoben werden.

In der DE 101 01 096 A1 wird ein Verfahren zur Betätigung einer Spannvorrichtung für Werkzeuge beschrieben, die an einer rotierend antreibbaren Spindel vorgesehen ist und eine Betätigungseinrichtung für die Betätigungsstange aufweist. Bei diesem Verfahren wird die über die Betätigungsstange ausgeübte, auf ein an der Spindel eingespanntes Werkzeug wirkende axiale Spannkraft geregelt, vorzugsweise auch während des Betriebs und des Umlaufs der Spindel, wobei die Größe der Spannkraft werkzeugbezogen eingestellt und geregelt wird.

Die Betätigungsstange wird mittels eines Elektromotors angetrieben. Die IstWerte für die Regelung generiert ein zwischen der Spindel und dem Werkzeug angeordneter Sensor, der die dort auftretenden Kräfte misst.

Der Erfindung liegt die Aufgabe zugrunde, ein Verfahren zur Betätigung einer Spannvorrichtung sowie ein Spannsystem so auszubilden, dass bei geringem konstruktivem Aufwand eine hohe Funktionalität bei der Durchführung von Spannvorrichtungen gegeben ist.

Zur Lösung dieser Aufgabe sind die Merkmale der Ansprüche 1 und 15 vorgesehen. Vorteilhafte Ausführungsformen und zweckmäßige Weiterbildungen der Erfindung sind in den Unteransprüchen beschrieben.

Das erfindungsgemäße Verfahren dient zur Betätigung einer Spannvorrichtung zum Spannen eines Werkzeugs oder Werkstücks. Das Werkzeug umfasst einen elektrischen Antrieb, in welchem Einrichtungen zur Messung von Motorströmen und Motorpositionen zur Kontrolle von mit der Spannvorrichtung durchgeführten Spannvorgängen integriert sind. Weiterhin ist ein Spannsystem zur Durchführung des Verfahrens vorgesehen.

Bei komplexen Werkstücken können insbesondere auch Mehrfachspannsysteme, das heißt mehrere Spannsysteme gemäß der vorliegenden Erfindung eingesetzt werden. Das erfindungsgemäße Spannsystem kann dabei generell zum Spannen feststehender Werkstücke oder sich bewegender, insbesondere rotierender Werkstücke eingesetzt werden. Die Spannvorrichtungen zum Spannen von Werkstücken können generell rotationssymmetrische Spannwerkzeuge aufweisen, deren Durchmesser durch kegelförmige Umsetzungen variiert werden können. Weiterhin können als Spannwerkzeuge auch Spannzangen oder dergleichen eingesetzt werden.

Ein wesentlicher Vorteil des erfindungsgemäßen Verfahrens beziehungsweise des erfindungsgemäßen Spannsystems besteht darin, dass die notwendigen Spannkräfte zum Spannen des Werkzeugs oder Werkstücks allein durch den elektrischen Antrieb aufgebracht werden können, so dass mechanische Systeme, wie Federpakte zum Schließen der Spannvorrichtung sowie Hydraulikeinrichtungen zum Öffnen der Spannvorrichtungen, entfallen können.

Um die notwendige Funktionssicherheit der Spannvorrichtung zu gewährleisten, ist es bei derartigen elektrischen Spannsystemen hilfreich, die Spannkräfte bei Durchführung der Spannvorgänge zu bestimmen. Bei dem erfindungsgemäßen Spannsystem wird dies auf konstruktiv einfache Weise dadurch gelöst, dass mittels innerhalb des elektrischen Antriebs integrierter Messeinrichtungen sowohl die Motorströme als auch die Motorpositionen bestimmt werden können.

Die gemessenen Motorströme liefern ein Maß für die auftretenden Spannkräfte. Durch die zusätzliche Messung der Motorpositionen wird eine ortsaufgelöste Spannkraftmessung ermöglicht, und zwar ohne Einsatz aufwändiger externer Sensoren, da die Messeinrichtungen im Antrieb selbst integriert sind.

Anhand dieser Messgrößen ist eine genaue und umfassende Kontrolle der mit der Spannvorrichtung durchgeführten Spannvorgänge möglich.

Generell können die Messungen während des Spannvorgangs selbst durchgeführt werden, so dass für die Messungen kein zusätzlicher Zeitbedarf besteht. Alternativ können die Messungen in einem von den Spannvorgang getrennten Messvorgang durchgeführt werden. Dabei wird die Spannvorrichtung bei dem Messvorgang langsamer bewegt als beim Spannvorgang, um so die Messgenauigkeit zu erhöhen. Besonders vorteilhaft besteht für den Bediener des Spannsystems eine Wahlmöglichkeit, ob er den Messvorgang in den Spannvorgang integrieren möchte oder nicht.

Gemäß einem ersten Aspekt der Erfindung werden die gemessenen Motorströme und Motorpositionen zur Regelung des elektrischen Antriebs genutzt, um so die durchzuführenden Spannvorgänge aktiv zu kontrollieren. Wesentlich für diese Kontrolle ist, dass die gemessen Motorströme ein Maß für die aktuellen Spannkräfte sind, deren Kenntnis für ein Durchführen kontrollierter Schließ- und Öffnungsbewegungen der Spannvorrichtungen entscheidend ist. Die Berechnung der Spannkraft erfolgt anhand der gemessenen Motorströme anhand eines physikalischen Modells, in welches die relevanten physikalischen Einflussgrößen wie Reibung, Elastizitäten und kinematische Verhältnisse eingehen. Die zusätzliche Messung der Motorpositionen gibt weiterhin ein Maß für die aktuelle Lage der Spannvorrichtung, so dass zur Regelung des elektrischen Antriebs eine ortsaufgelöste Information über die aktuellen Spannkräfte vorliegt.

In einer besonders vorteilhaften Ausführungsform der Erfindung erfolgt die Regelung des elektrischen Antriebs derart, dass bei Anfahren der Spannvorrichtung an das Werkzeug, und entsprechend bei Wegfahren der Spannvorrichtung vom Werkzeug, eine Positionsregelung des Antriebs, durchgerührt wird. Vorteilhaft aber nicht zwingend wird bei einem bestimmten Punkt des Spannvorgangs eine Umschaltung auf eine Kraftregelung oder Momentenregelung, das heißt eine Regelung des elektrischen Antriebs in Abhängigkeit der gemessenen Motorströme, durchgeführt. Dabei erfolgt eine fliegende Umschaltung zwischen Positions- und Kraftregelung. Diese Regelung ist an den zeitlichen Verlauf des Spannvorgangs angepasst und führt somit zu einer Optimierung der durchzuführenden Spannvorgänge. Entsprechendes gilt bei Spannen von Werkstücken.

Gemäß einem zweiten Aspekt der Erfindung werden anhand der gemessenen Motorströme und Motorpositionen Kenngrößen abgeleitet, anhand derer Aussagen über die Qualität der durchgeführten Spannvorgänge möglich sind. Dies ermöglicht eine Prozesskontrolle derart, dass auftretende Fehler beim Spannvorgang, insbesondere auch vorhandene Materialfehler, aufgedeckt werden können.

Eine erste derartige Kenngröße stellt der effektive Spannschaftdurchmesser des Werkzeugs dar, der durch die Ermittlung des örtlichen Verlaufs, insbesondere des Anstiegs der Spannkraft in Abhängigkeit von der Motorposition, ermittelt und kontrolliert werden kann. Durch den Vergleich des gemessenen Spannschaftdurchmessers mit einem Sollwert können beispielsweise Fehlklemmungen detektiert werden, das heißt es kann ermittelt werden, ob ein Werkzeug eingespannt ist und ob das richtige Werkzeug eingespannt wurde. Weiterhin kann dabei kontrolliert werden, ob das Werkzeug außerhalb von vorgegebenen Toleranzen liegt. Besonders vorteilhaft wird durch Messung des örtlichen Verlaufs des Anstiegs der Spannkraft ermittelt, ob der Spannschaft Defekte oder Verunreinigungen aufweist. Entsprechendes gilt bei Spannen von Werkstücken.

Weiterhin können durch Messung von Gleit- und Haftreibungskräften durch Ermitteln der Motorströme bei Verfahren der Spannvorrichtungen zusätzliche Kenngrößen abgeleitet werden. Die Messung von Gleitreibungskräften liefert dabei ein Maß für die innerhalb des Spannsystems vorhandene Schmiermittelmenge oder für vorhandene Beschichtungen, deren Zustand man damit ermitteln kann. Demgegenüber liefert die Messung von Haftreibungskräften ein Maß für die Selbsthemmung des mechanischen Spannsystems, das heißt der Mechanik der Spannvorrichtung.

Die Erfindung wird im Nachstehenden anhand der Zeichnungen erläutert. Es zeigen:

Figur 1: Blockschaltbild eines ersten Spannsystems mit einem elektri- schen Antrieb in Form eines Linearantriebs.

Figur 2: Blockschaltbild eines zweiten Spannsystems mit einem elektri- schen Antrieb in Form eines rotativen Antriebs mit einer Über- setzung.

Figur 3: Zeitabhängiger Verlauf der bei Durchführung eines Spannvor- gangs mittels eines Spannsystems gemäß Figur 1 oder Figur 2 auftretenden Kräfte.

Figur 4: Bestimmung des Spannschaftdurchmessers aus dem positions- abhängigen Verlauf der Spannkräfte für zwei unterschiedliche Werkzeuge.

Figur 5: Bestimmung von Defekten oder Verunreinigungen eines Spann- schafts aus dem positionsabhängigen Verlauf der Spannkraft.

Figur 6: Bestimmung von Gleit- und Haftreibungskräften aus dem positi- onsabhängigen Verlauf der Spannkraft.

Figur 7 a - c: Modelldarstellung eines Spannsystems in unterschiedlichen Pha- sen eines Spannvorgangs.

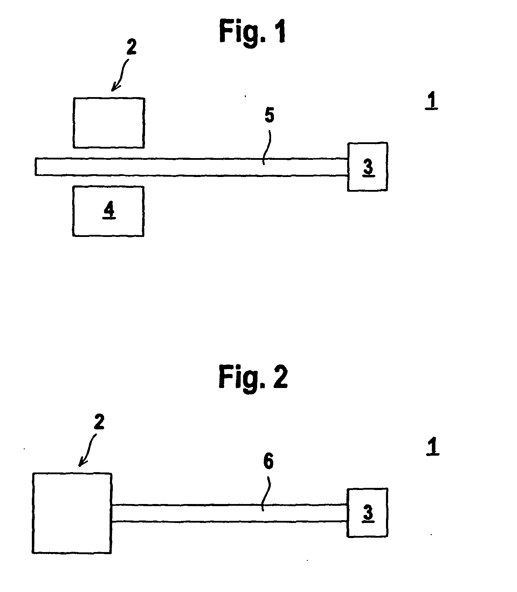

Die Figuren 1 und 2 zeigen schematisch jeweils ein Spannsystem 1 zum Spannen eines Werkzeugs wie beispielsweise eines Bohrers oder eines Fräsers. Obwohl in den Figuren auf ein Spannsystem für Werkzeuge Bezug genommen wird, ist das Spannsystem generell auch zum Spannen von Werkstücken geeignet. In beiden Ausführungsbeispielen ist ein elektrischer Antrieb 2 zur Betätigung einer Spannvorrichtung 3 vorgesehen. Die Spannvorrichtung 3 ist in bekannter Weise in Form einer Spannzange oder einem Spannsatz mit mehreren Spannelementen ausgebildet, welche in einer Aufnahme einer Werkzeughalterung angeordnet sind.

Der elektrische Antrieb 2 gemäß Figur 1 ist als Linearantrieb ausgebildet. Dieser weist bekannterweise eine stationäre Anordnung von Spulen 4 sowie eine stabförmige, lineare Anordnung von Magneten 5 auf, die relativ zu den Spulen 4 bewegt werden. Mit der Linearbewegung der Magnete 5 wird die Spannvorrichtung 3 betätigt, das heißt mittels des elektrischen Antriebs 2 werden Schließ- und Öffnungsbewegungen der Spannvorrichtung 3 bewirkt. Alternativ kann auch ein Linearantrieb eingesetzt werden, bei welchem die Spulen 4 bewegt werden und die Magnete 5 stationär sind.

Der elektrische Antrieb 2 gemäß Figur 2 ist als rotativer Antrieb 2 mit einer Übersetzung in Form einer Gewindespindel 6 ausgebildet. In diesem Fall wirkt der elektrische Antrieb 2 über die Gewindespindel 6 auf die Spannvorrichtung 3.

In beiden Ausführungsformen sind innerhalb des elektrischen Antriebs 2 Messeinrichtungen in Form von Gebern oder Sensoren vorgesehen, mittels derer die aktuellen Motorpositionen und Motorströme gemessen werden können.

Diese werden in einer nicht dargestellten Auswerteeinheit ausgewertet. Dabei werden die ermittelten Motorströme als Maß für die Spannkräfte, die bei mit der Spannvorrichtung 3 durchgeführten Spannvorgängen auftreten, ausgewertet. Die gemessenen Motorpositionen liefern ein Maß für die aktuellen Positionen der Spannvorrichtung 3.

Der elektrische Antrieb 2 besteht generell aus einem Elektromotor und einem Umrichter, wobei vorteilhaft die Sensorik zur Messung der Motorpositionen am Motor angeordnet ist und die Sensorik zur Messung der Motorströme im Umrichter integriert ist. Die Auswerteeinheit ist im Umrichter oder in einer diesem zugeordneten Steuereinheit vorgesehen.

Um beispielsweise nach einem Stromausfall das Herausfallen eines Werkzeugs aus der Spannvorrichtung 3 zu verhindern, ist das mechanische Spannsystem gemäß Figur 2 selbsthemmend ausgebildet. Die Selbsthemmung ergibt sich aus einer hinreichend großen Haftreibung, die beim Anfahren des elektrischen Antriebs 2 überwunden werden muss. Diese Haftreibung ist so groß, dass ein Öffnen der Spannvorrichtung 3 ohne aktive Betätigung durch den elektrischen Antrieb 2 nicht möglich ist.

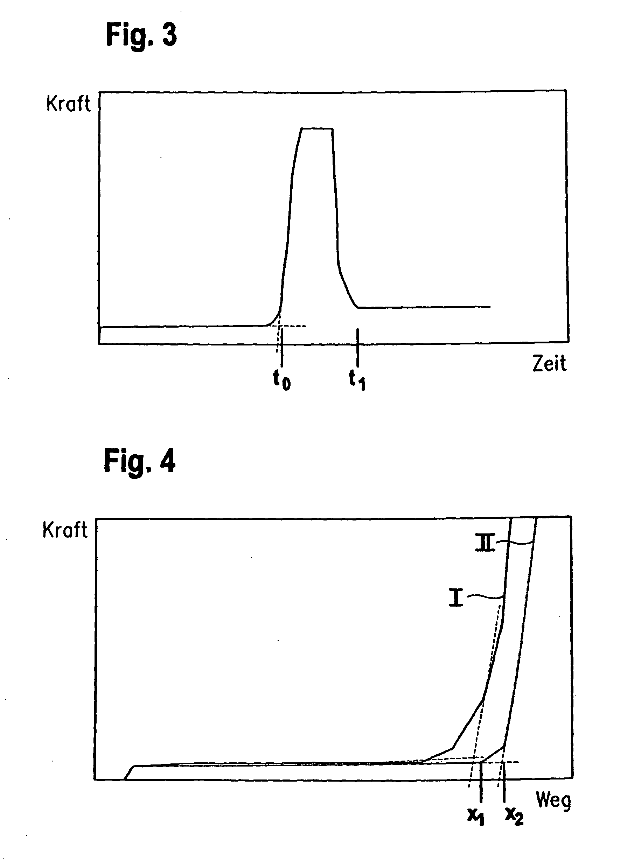

Die Funktion des Spannsystems 1 wird im Folgenden anhand der Figuren 3 bis 6 erläutert, wobei diese für beide Ausführungsvarianten des Spannsystems 1 gemäß Figur 1 und Figur 2 gültig sind.

Zur Durchführung der Spannvorgänge mittels des Spannsystems 1 wird der elektrische Antrieb 2 mit einer Regelung betrieben, wobei die hierfür vorgesehene Regeleinheit im Umrichter oder in der Steuereinheit integriert ist.

Der Regelungsprozess ist in Figur 3 veranschaulicht, welche den zeitlichen Verlauf der bei einem Spannvorgang auftretenden Kräfte zeigt.

Im Zeitintervall $0 \leq t \leq t_0$ erfolgt das Anfahren der Spannvorrichtung 3 an das zu spannende Werkzeug, das heißt die Spannvorrichtung 3 ist noch nicht in Kontakt mit dem Werkzeug, wobei der Begriff Kontakt die Plananlage der Spannvorrichtung 3 am Werkzeug bezeichnet. Auch in diesem Zeitintervall ist die Kraft, die vom elektrischen Antrieb 2 aufgebracht werden muss, nicht null sondern nimmt einen endlichen Wert an. Diese Kraft entspricht den im Spannsystem 1 wirkenden Gleitreibungskräften. Wird der Antrieb 2 in dieser Phase beschleunigt, kommt noch die Beschleunigungskraft dazu.

In diesem Zeitintervall erfolgt eine Positionsregelung des elektrischen Antriebs 2 in Abhängigkeit der Messwerte der Messeinrichtung zur Bestimmung der aktuellen Motorposition. Durch diese Positionsregelung wird ein bestimmtes Geschwindigkeitsprofil des elektrischen Antriebs 2 und damit der Bewegung der Spannvorrichtung 3 erhalten.

Zum Zeitpunkt $t_0$ erfolgt der Kontakt der Spannvorrichtung 3 mit dem Werkzeug, wonach im Zeitintervall $t_0 < t < t_1$ das Werkzeug mit der Spannvorrichtung 3 gespannt wird. Die durch Messung der Motorströme bestimmte Kraft, das heißt die Spannkraft zum Spannen des Werkzeugs, nimmt dann sehr schnell bis zu einem Maximalwert zu und fällt dann am Ende des Spannvorgangs ab. Im anschließenden Zeitintervall $t \geq t_1$ wird dann das Werkzeug mit einer konstanten Haltekraft mittels der Spannvorrichtung 3 gehalten. Beim Spannen von Werkzeugen wird üblicherweise der Motor abgekoppelt und übt selbst keine Kraft mehr aus. Die Haltekraft wird dann durch die Reibungskraft aufgebracht. Beispielsweise beim Spannen feststehender Werkstücke kann der Motor unter Kraft gekoppelt bleiben und so zusammen mit der Reibungskraft die Haltekraft aufbringen.

Für die Zeiten $t > t_0$ erfolgt eine Kraftregelung des Antriebs 2, so dass mit diesem das in Figur 3 dargestellte Profil des Kraftverlaufs erhalten wird. Hierzu wird der elektrische Antrieb 2 in Abhängigkeit der mit der Messeinrichtung bestimmten Motorströme geregelt. Im Zeitpunkt $t = t_0$ erfolgt eine fliegende Umschaltung zwischen Positions- und Kraftregelung.

Die mit den Messeinrichtungen bestimmten Messwerte für die Motorströme und Motorpositionen werden nicht nur zur Regelung des elektrischen Antriebs 2, sondern auch, wie in den Figuren 4 bis 6 veranschaulicht, zur Ableitung von Kenngrößen genutzt, die Aussagen über den Spannvorgang, insbesondere auch die Qualität der Spannvorrichtung 3, erlauben. Dabei zeigen die Figuren 4 bis 6 den wegabhängigen Verlauf der bei der Spannvorrichtung 3 auftretenden Kräfte, das heißt die Spannkräfte in Abhängigkeit der aktuellen Positionen der Spannvorrichtung 3.

In Figur 4 sind mit I und II zwei wegabhängige Verläufe der Spannkräfte beim Spannen zweier Werkzeuge mit unterschiedlichen Spannschaftdurchmessern dargestellt.

Die Punkte x1 beziehungsweise x2 definieren die Kontaktpunkte der Spannvorrichtungen 3 mit dem jeweiligen Werkzeug. Durch Ermittlung dieser Berührungspunkte können die effektiven Spannschaftdurchmesser der einzelnen Werkzeuge ermittelt werden. Auch im vorliegenden Fall erfolgt ein Anfahren der Spannvorrichtung 3 an das Werkzeug eine Positionsregelung des elektrischen Antriebs 2 und beim Spannen des Werkzeugs eine Kraftregelung. Die Spannschaftdurchmesser können dann, wie in Figur 4 dargestellt, dadurch bestimmt werden, dass die Tangenten der Teilkurven für die Positions- und Kraftregelung gebildet werden, wobei deren Schnittpunkt den effektiven Spannschaftdurchmesser bestimmt. Der Spannschaftdurchmesser wird aus dem Anstieg der Spannkraft und gegebenenfalls zusätzlich aus dem Spannweg abgeleitet.

Die ermittelten Spannschaftdurchmesser werden in der Auswerteeinheit mit dort hinterlegten Sollwerten von Spannschaftdurchmessern für die einzelnen Werkzeuge verglichen. Durch diesen Vergleich kann bestimmt werden, ob die Spannschaftdurchmesser innerhalb vorgegebener Toleranzen liegen. Weiterhin ist feststellbar, ob das richtige Werkzeug gespannt wurde oder ob es verkantet in der Werkzeugaufnahme liegt.

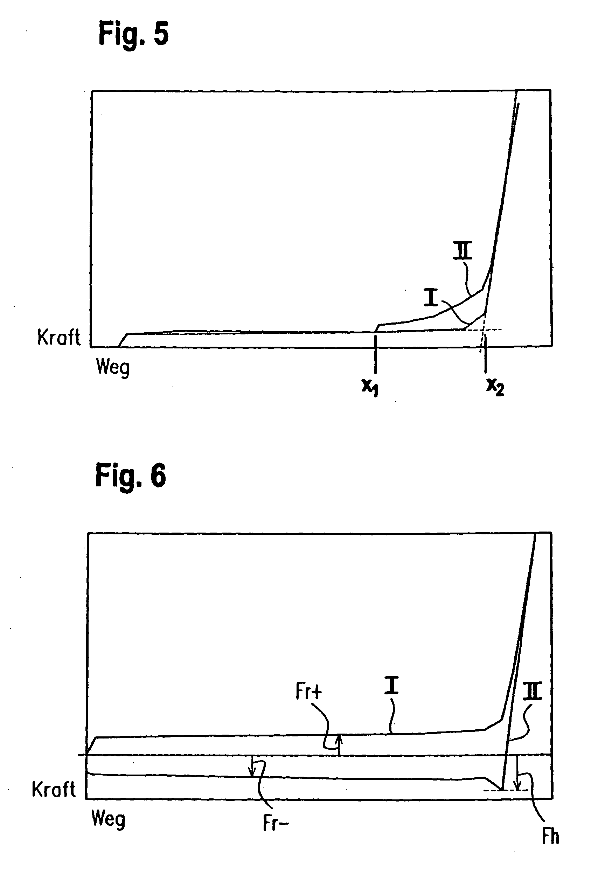

In Figur 5 ist wiederum der wegabhängige Verlauf der Spannkraft bei Spannen eines Werkzeugs dargestellt. Dabei zeigt die mit I bezeichnete Kurve den Fall, dass der Spannschaft des Werkzeugs fehlerfrei ist. Die mit II bezeichnete Kurve zeigt dagegen den Fall, dass der Spannschaft verunreinigt ist.

Durch die Verunreinigungen steigt die Spannkraft frühen an als bei einem nicht verunreinigten Spannschaft, dafür ist die Steigung der Spannkraft geringer, da durch Verunreinigungen wie Späne im Allgemeinen das effektive E-Modul des Systems, bestehend aus Werkzeug und Spannvorrichtung 3, herabgesetzt wird.

Durch die Analyse des Anstiegs der Spannkraft kann somit ermittelt werden, ob der Spannschaft des Werkzeugs mit Verunreinigungen behaftet ist oder nicht.

Figur 6 zeigt den wegabhängigen Spannkraftverlauf sowohl bei Spannen des Werkzeugs mittels der Spannvorrichtung 3 (Kurve I) als auch bei Öffnen der Spannvorrichtung 3 (Kurve II).

Während des Anfahrens der Spannvorrichtung 3 an das Werkzeug und des Öffnens der Spannvorrichtung 3, das heißt während der Zeitintervalle innerhalb derer eine Positionsregelung des elektrischen Antriebs 2 durchgeführt wird, wird durch Messung der Motorströme ein Maß für die Gleitreibungskräfte $F_R$ beziehungsweise -$F_R$ im Spannsystem 1 erhalten. Diese wiederum bilden ein Maß für die im System vorhandene Schmiermittelmenge. Ebenso liefern diese Kräfte Informationen von im Spannsystem vorhandenen Beschichtungen wie Trockenschichten.

Unmittelbar bei Ablösen der Spannvorrichtung 3 vom Werkzeug wird zudem die Haftreibungskraft $F_H$ gemessen, die erforderlich ist, um die Spannvorrichtung 3 vom Werkzeug zu lösen. Diese Haftreibungskräfte $F_H$ liefern ein Maß für die Selbsthemmung des mechanischen Spannsystems.

Beim Lösen der Spannvorrichtung 3 vom Werkzeug wird vorteilhaft ausgenutzt, dass zwischen dem Motorläufer als Aktor des elektrischen Antriebs 2, der entweder vom beweglichen Teil des Linearantriebs oder der Gewindespindel 6 beim rotativen Aufrieb gebildet ist, sowie der Mechanik der Spannvorrichtung 3 ein Spiel vorhanden ist. Beim Lösen des Werkzeugs kann zunächst das Spiel mit sanfter Bewegung überwunden werden, um dann eine große Kraft zum Lösen des Werkzeugs anzuwenden. Führt dies nicht zum Lösen des Werkzeugs, das heißt ist das Werkzeug festgebacken, so wird das Spiel dazu verwendet, dass der Aktor Anlauf holt, um dann mit einem Hammereffekt schlagartig die Spannvorrichtung 3 zu lösen.

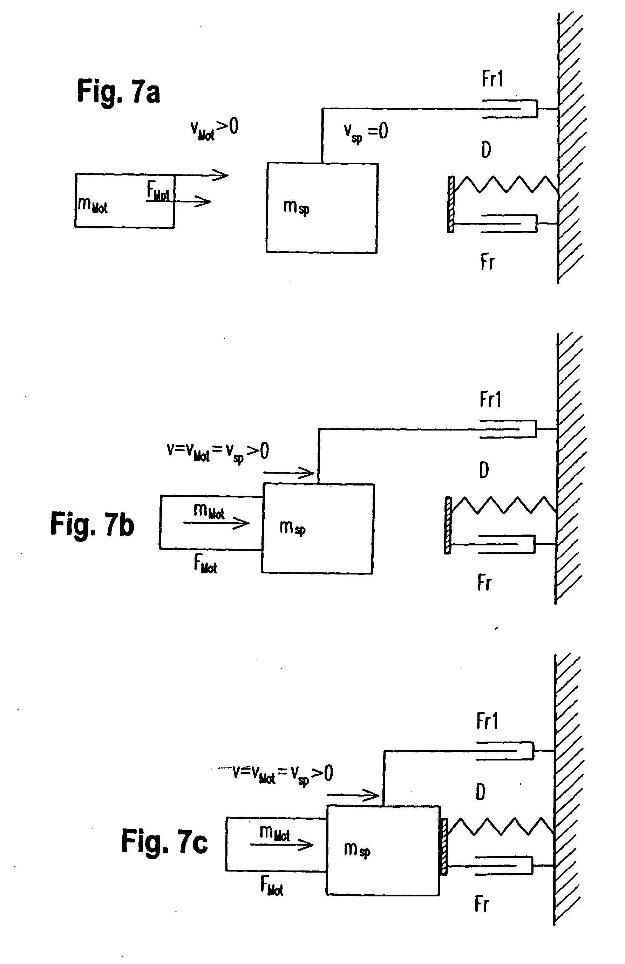

Das vorhandene Spiel zwischen Motorläufer und Spannvorrichtung 3 wird vorteilhaft auch zur Optimierung des Spannvorgangs genutzt wie nachfolgend anhand der Figuren 7 a bis c erläutert wird.

Dabei wird generell das Spiel zwischen Motorläufer und Spannvorrichtung 3 dazu genutzt, den Motorläufer gegen die Spannvorrichtung 3 zu beschleunigen, um neben der Motorkraft zusätzlich eine kinetische Energie der Masse des Motorläufers in Spannkräfte umzusetzen, um so die für den Spannvorgang benötigten Kräfte sicher bereitstellen zu können. Diese Kräfte sind insbesondere auch deshalb so groß, weil beim Spannvorgang die Selbsthemmung des Antriebs 2 überwunden werden muss.

In den Figuren 7 a bis c sind Komponenten eines Spannsystems 1 wie in den Figuren 1 und 2, in Form eines Feder-Masse-Modells, dargestellt und beschrieben. Dabei sind mit $m_{Mot}$ und $v_{Mot}$ die Masse beziehungsweise Geschwindigkeit des Motorläufers, das heißt der bewegten Massen des Antriebs des Spannsatzes, und mit $m_{sp}$ und $v_{sp}$ die Masse beziehungsweise Geschwindigkeit eines die Spannvorrichtung 3 bildenden Spannsatzes des Spannsystems 1 beschrieben.

Weiterhin ist in den Figuren 7 a bis c das Werkzeug modellmäßig durch eine Federkonstante D und eine Reibungskraft $F_R$ beschrieben. Schließlich ist mit $F_{R1}$ eine weitere, gegen die Bewegung der Masse $m_{sp}$ wirkende Reibungskraft beschrieben.

Figur 7a zeigt die erste Phase des Spannvorgangs, in welcher aufgrund des vorhandenen Spiels zwischen Motorläufer und Spannsatz der Motorläufer auf den Spannsatz zu beschleunigt werden kann. Dementsprechend wirkt auf die Masse $m_{Mot}$ die vom Antrieb 2 ausgeübte Motorkraft $F_{Mot}$, wodurch diese beschleunigt wird. Die Masse $m_{sp}$ des Spannsatzes ist dagegen noch im Ruhezustand ($v_{sp}$ = 0).

Je größer der Spielbereich ist, umso mehr Schwung kann der Motorläufer in dieser Phase aufnehmen und umso größer ist die Geschwindigkeit des Motorläufers $v_{Mot}$ kurz vor Auftreffen auf die Masse $m_{sp}$.

Figur 7b zeigt die zweite Phase des Spannvorgangs nach Auftreffen des Motorläufers auf den Spannsatz. Nach dem Zusammenstoß der Massen $m_{sp}$ und $m_{Mot}$ bewegen sich diese gemeinsam mit einer Geschwindigkeit v weiter, das heißt es liegt in guter Näherung ein unelastischer Stoß vor.

Die Geschwindigkeit v des Gesamtsystems von Motorläufer und Spannzug unmittelbar nach deren Zusammentreffen beträgt

$$v = m_{Mot} \cdot v_{Mot} / (m_{Mot} + m_{sp})$$

Danach werden beide Massen, das heißt, m = $m_{Mot} + m_{sp}$, durch die Motorkraft über eine gewisse Strecke unter Einfluss einer ersten Reibungskraft $F_{R1}$ weiter beschleunigt und nehmen dabei noch mehr kinetische Energie auf.

Figur 7c zeigt die dritte Phase des Spannvorgangs zu Beginn des eigentlichen Spannens des Werkzeugs mit dem Spannsatz.

Zu Beginn dieses Spannvorgangs haben Motor und Spannsatz die Geschwindigkeit $v_S$ und treffen auf das Werkzeug, welches durch eine effektive Federkonstante D und eine Reibungskraft $F_R$ nach dem Hookeschen Gesetz beschrieben werden kann. Die Reibungskraft $F_R$ ist in erster Näherung unabhängig von der Geschwindigkeit, jedoch proportional zur Spannkraft (also auch zum Spannweg) selbst. Die zusätzlich Masse des Werkzeugs selbst, die beim Spannen bewegt wird, ist durch die hohe Übersetzung vernachlässigbar. Beim Spannen wirkt die Motorkraft weiter, jedoch nehmen die Gegenkräfte, nämlich Federkraft und Reibung $F_R$ stark zu und verringern die Beschleunigung bis auf 0. In diesem Moment würde der Antrieb wieder beginnen, zurück zu laufen. Dies wird jedoch durch die Reibung zwischen Spannvorrichtung 3 und Werkzeug verhindert. Die Reibungskraft $F_R$ ändert dann ihr Vorzeichen und zeigt ebenfalls in die positive Richtung. Dabei kompensiert sie alle anderen angreifenden Kräfte, solange diese nicht größer werden, als die maximale Haftreibungskraft. Der Spannweg (Bremsweg) wird umso größer, je höher die Geschwindigkeit der auftreffenden Massen kurz vor dem Spannen des Werkzeugs und je größer die wirkende Motorkraft während des Spannens ist. Entsprechend größer wird auch die resultierende Spannkraft.

Wie die Modellbetrachtung gemäß Figuren 7a bis c zeigt, wird durch die Ausnutzung des Spiels zwischen Motorläufer und Spannsatz infolge der zusätzlich zur Motorkraft genutzten kinetischen Energie die Spannkraft signifikant erhöht.

Gemäß des in den Figuren 7 a bis c beschriebenen Modells kann der Spannweg, das heißt der Bremsweg der Massen $m_{Mot}$ und $m_{sp}$, als direktes Maß für die Spannkraft ausgewertet werden.

Bei Auftreffen des Motorläufers auf den Spannsatz entsteht eine hohe Spitzenkraft, die zu einem Verschleiß oder sogar einer Zerstörung von Lagerteilen und dergleichen führen kann. Zur Vermeidung derartiger Kraftspitzen kann am Motorläufer oder am Spannsatz ein Dämpfungselement oder Federelement wie eine Tellerfeder vorgesehen sein.

Bezugszeichenliste

(1)     Spannsystem

(2)     Antrieb

(3)     Spannvorrichtung

(4)     Spule

(5)     Magnet

(6)     Gewindespindel

**Patentansprüche**

1.   Verfahren zur Betätigung einer Spannvorrichtung (3) zum Spannen eines Werkzeugs oder Werkstücks mittels eines elektrischen Antriebs (2), in welchem Einrichtungen zur Messung von Motorströmen und Motorpositionen zur Kontrolle von mit der Spannvorrichtung (3) durchgeführten Spannvorgängen integriert sind, **gekennzeichnet durch** die folgenden Schritte:

    - Messung der Motorströme und zusätzlich Messung der Motorpositionen;
    - Auswertung der Motorströme als Maß für Spannkräfte sowie der Motorpositionen als Maß für eine aktuelle Position der Spannvorrichtung;
    - Ermittlung eines wegabhängigen Verlaufs der Spannkräfte als Abhängigkeit der Spannkräfte von der aktuellen Position der Spannvorrichtung; und
    - Ableitung von Kenngrößen des Spannvorgangs aus dem wegabhängigen Verlauf der Spannkräfte.

2.   Verfahren nach Anspruch 1, **dadurch gekennzeichnet, dass** die Messungen jeweils während eines Spannvorgangs oder während eines Messvorgangs, bei welchem die Spannvorrichtung gegenüber dem Spannvorgang mit geringerer Geschwindigkeit bewegt wird, durchgeführt werden.

3.   Verfahren nach einem der Ansprüche 1 oder 2, **dadurch gekennzeichnet, dass** aus dem gemessenen Motorstrom unter Anwendung eines Modells, in welches relevante physikalische Einflussparameter eingehen, die Spannkraft, mit welcher die Spannvorrichtung (3) das Werkzeug spannt und/oder die Lösekraft, die Kraft zum Lösen des gespannten Werkzeugs, benötigt wird, bestimmt wird.

4.   Verfahren nach einem der Ansprüche 1 bis 3, **da-**

**durch gekennzeichnet, dass** der zeitabhängige Verlauf der Spannkräfte bestimmt wird.

5. Verfahren nach Anspruch 1, **dadurch gekennzeichnet, dass** der Spannweg der Spannvorrichtung als Maß für die jeweilige Spannkraft ausgewertet wird.

6. Verfahren nach einem der Ansprüche 1 bis 5, **dadurch gekennzeichnet, dass** der elektrische Antrieb (2) mit einer Regelung betrieben wird.

7. Verfahren nach Anspruch 6, **dadurch gekennzeichnet, dass** bei Anfahren der Spannvorrichtung (3) an das Werkzeug eine Positionsregelung durchgeführt wird, und dass bei einem bestimmten Punkt des Spannvorgangs eine Umschaltung auf eine Kraftregelung oder Momentenregelung erfolgt.

8. Verfahren nach Anspruch 7, **dadurch gekennzeichnet, dass** eine fliegende Umschaltung zwischen Positions- und Kraftregelung oder Momentenregelung durchgeführt wird.

9. Verfahren nach einem der Ansprüche 1 bis 8, **dadurch gekennzeichnet, dass** als eine Kenngröße des Spannvorgangs der effektive Spannschaftdurchmesser des Werkzeugs als Schnittpunkt der Tangenten an zwei Teilkurven des wegabhängigen Verlaufs der Spannkräfte bestimmt wird.

10. Verfahren nach Anspruch 9, **dadurch gekennzeichnet, dass** der gemessene Spannschaftdurchmesser mit einem Sollwert verglichen wird.

11. Verfahren nach einem der Ansprüche 1 bis 10, **dadurch gekennzeichnet, dass** als eine Kenngröße des Spannvorgangs durch Auswertung des wegabhängigen Verlaufs der Spannkräfte, insbesondere eines Startpunktes eines Anstiegs der Spannkräfte und dessen Steigung, ermittelt wird, ob der Spannschaft Defekte oder Verunreinigungen aufweist.

12. Verfahren nach einem der Ansprüche 1 bis 11, **dadurch gekennzeichnet, dass** als eine Kenngröße des Spannvorgangs Gleitreibungskräfte als Kenngröße für die im elektrischen Antrieb (2) und der Spannvorrichtung (3) vorhandenen Schmiermittel oder Beschichtungen aus dem wegabhängigen Verlauf der Spannkräfte ermittelt werden.

13. Verfahren nach einem der Ansprüche 1 bis 12, **dadurch gekennzeichnet, dass** als eine Kenngröße des Spannvorgangs Haftreibungskräfte als Kenngrößen für die Selbsthemmung der Mechanik der Spannvorrichtung (3) aus dem wegabhängigen Verlauf der Spannkräfte ermittelt werden.

14. Verfahren nach einem der Ansprüche 1 bis 13, **dadurch gekennzeichnet, dass** ein Spiel zwischen einem von bewegten Massen des Antriebs (2) gebildeten Motorläufer und der Spannvorrichtung (3) dazu genutzt wird, durch Beschleunigen des Motorläufers auf die Spannvorrichtung (3) die Spannkraft zu erhöhen.

15. Spannsystem zur Betätigung einer Spannvorrichtung (3) zum Spannen eines Werkzeugs oder Werkstücks mittels eines elektrischen Antriebs (2), in welchem Messeinrichtungen zur Messung von Motorströmen und Motorpositionen integriert sind, mittels derer mit der Spannvorrichtung (3) durchgeführte Spannvorgänge kontrollerbar sind, **dadurch gekennzeichnet, dass**

- durch die Messeinrichtungen sowohl die Motorströme als auch zusätzlich die Motorpositionen erfassbar sind;
- eine Auswerteeinheit vorgesehen ist, mittels derer die Motorströme als Maß für Spannkräfte und die Motorpositionen als Maß für eine aktuelle Position der Spannvorrichtung auswertbar sind, wobei
- ein wegabhängiger Verlauf der Spannkräfte als Abhängigkeit der Spannkräfte von der aktuellen Position der Spannvorrichtung ermittelbar ist; und wobei
- Kenngrößen des Spannvorgangs aus dem wegabhängigen Verlauf der Spannkräfte ableitbar sind.

16. Spannsystem, nach Anspruch 15, **dadurch gekennzeichnet, dass** als Kenngrößen des Spannvorgangs ein effektiver Durchmesser eines Spannschafts, Defekte oder Verunreinigungen des Spannschafts und/oder Gleit- und/oder Haftreibungskräfte ermittelbar sind.

17. Spannsystem nach einem der Ansprüche 15 oder 16, **dadurch gekennzeichnet, dass** der elektrische Antrieb (2) ein Linearantrieb ist.

18. Spannsystem nach Anspruch 16, **dadurch gekennzeichnet, dass** der elektrische Antrieb (2) ein rotativer Antrieb (2) mit einer Übersetzung ist.

19. Spannsystem nach Anspruch 18, **dadurch gekennzeichnet, dass** dem elektrischen Antrieb (2) eine Gewindespindel als Übersetzung zugeordnet ist.

20. Spannsystem nach einem der Ansprüche 15 bis 19, **dadurch gekennzeichnet, dass** mit dem elektrischen Antrieb (2) allein die Spannkräfte zum Spannen des Werkzeugs mit der Spannvorrichtung (3) generiert werden.

**21.** Spannsystem nach einem der Ansprüche 15 bis 19, **dadurch gekennzeichnet, dass** Hilfsfederpakete vorgesehen sind, mittels derer zusätzlich zu den mittels des elektrischen Antriebs (2) generierten Spannkräften eine Vorspannung generiert wird.

**22.** Spannsystem nach einem der Ansprüche 15 bis 21, **dadurch gekennzeichnet, dass** an dem Motorläufer des Antriebs (2) oder der Spannvorrichtung (3) ein Dämpfungs- oder Federelement angeordnet ist.

## Claims

**1.** A method of actuating a clamping apparatus (3) for clamping a tool or workpiece by means of an electric drive (2), in which there are integrated devices for the measurement of motor currents and motor positions for controlling clamping processes carried out with the clamping apparatus (3), **characterised by** the following steps:

- measuring the motor currents and additionally measuring the motor positions;
- evaluating the motor currents as a measurement of clamping forces and the motor positions as a measurement of a current position of the clamping apparatus;
- ascertaining a travel-dependent variation in the clamping forces as a dependency of the clamping forces on the current position of the clamping apparatus; and
- deriving characteristic parameters of the clamping process from the travel-dependent variation in the clamping forces.

**2.** A method according to claim 1 **characterised in that** the measurement operations are respectively carried out during a clamping process or during a measurement process, in which the clamping apparatus is moved at a lower speed in relation to the clamping process.

**3.** A method according to one of claims 1 and 2 **characterised in that** the clamping force with which the clamping apparatus (3) clamps the tool and/or the release force which is required for releasing the clamped tool is determined from the measured motor current using a model in which relevant physical influencing parameters are involved.

**4.** A method according to one of claims 1 to 3 **characterised in that** the time-dependent variation in the clamping forces is determined.

**5.** A method according to claim 1 **characterised in that** clamping travel of the clamping apparatus is evaluated as a measurement of the respective clamping force.

**6.** A method according to one of claims 1 to 5 **characterised in that** the electric drive (2) is operated with a regulating system.

**7.** A method according to claim 6 **characterised in that** when the clamping apparatus (3) approaches the tool position regulation is performed and that at a given point in the clamping process a switch-over to force regulation or moment regulation is effected.

**8.** A method according to claim 7 **characterised in that** a fluid switch-over between position and force regulation or moment regulation is performed.

**9.** A method according to one of claims 1 to 8 **characterised in that** the effective clamping shaft diameter of the tool is determined as a characteristic parameter of the clamping process as the point of intersection of the tangents to two curve portions of the travel-dependent variation in the clamping forces.

**10.** A method according to claim 9 **characterised in that** the measured clamping shaft diameter is compared to a reference value.

**11.** A method according to one of claims 1 to 10 **characterised in that** as a characteristic parameter of the clamping process by evaluation of the travel-dependent variation in the clamping forces, in particular a start point of a rise in the clamping forces and the gradient thereof, it is ascertained whether the clamping shaft has defects or contamination.

**12.** A method according to one of claims 1 to 11 **characterised in that** as a characteristic parameter of the clamping process sliding frictional forces are ascertained as a characteristic parameter for the coatings or lubricants in the electric drive (2) and the clamping apparatus (3) from the travel-dependent variation in the clamping forces.

**13.** A method according to one of claims 1 to 12 **characterised in that** static frictional forces are ascertained as a characteristic parameter of the clamping process, as characteristic parameters for the self-locking action of the mechanics of the clamping apparatus (3) from the travel-dependent variation in the clamping forces.

**14.** A method according to one of claims 1 to 13 **characterised in that** a clearance between a motor rotor formed by moved masses of the drive (2) and the clamping apparatus (3) is used to increase the clamping force by acceleration of the motor rotor towards the clamping apparatus (3).

**15.** A clamping system for actuating a clamping apparatus (3) for clamping a tool or workpiece by means of an electric drive (2), in which there are integrated measurement devices for measuring motor currents and motor positions, by means of which clamping processes performed with the clamping apparatus (3) are controllable, **characterised in that**

- both the motor currents and also in addition the motor positions can be detected by the measurement devices;
- there is provided an evaluation unit, by means of which the motor currents can be evaluated as a measurement of clamping forces and the motor positions can be evaluated as a measurement of a current position of the clamping apparatus, wherein
- a travel-dependent variation in the clamping forces can be ascertained as a dependency of the clamping forces on the current position of the clamping apparatus; and wherein
- characteristic parameters of the clamping process can be derived from the travel-dependent variation in the clamping forces.

**16.** A clamping system according to claim 15 **characterised in that** as characteristic parameters of the clamping process an effective diameter of a clamping shaft, defects or contamination of the clamping shaft and/or sliding and/or static frictional forces can be ascertained.

**17.** A clamping system according to one of claims 15 and 16 **characterised in that** the electric drive (2) is a linear drive.

**18.** A clamping system according to claim 16 **characterised in that** the electric drive (2) is a rotary drive (2) with a transmission.

**19.** A clamping system according to claim 18 **characterised in that** a threaded spindle is associated as the transmission with the electric drive (2).

**20.** A clamping system according to one of claims 15 to 19 **characterised in that** the clamping forces for clamping the tool with the clamping apparatus (3) are generated with the electric drive (2) alone.

**21.** A clamping system according to one of claims 15 to 19 **characterised in that** there are provided auxiliary spring packs, by means of which a biasing force is generated in addition to the clamping forces generated by means of the electric drive (2).

**22.** A clamping system according to one of claims 15 to 21 **characterised in that** a damping or spring element is arranged on the motor rotor of the drive (2) or the clamping apparatus (3).

## Revendications

**1.** Procédé pour actionner un dispositif de serrage (3) destiné à serrer un outil ou une pièce au moyen d'un entraînement électrique (2), dans lequel sont intégrés des dispositifs pour la mesure de courants de moteur et de positions de moteur aux fins de contrôle des cycles de serrage effectués avec le dispositif de serrage (3), **caractérisé par** les étapes suivantes :

- mesure des courants de moteur ainsi que mesure des positions de moteur ;
- évaluation des courants de moteur en tant que mesure des forces de serrage, ainsi que des positions de moteur en tant que mesure d'une position courante du dispositif de serrage ;
- détermination de la variation des forces de serrage en fonction de la course, sous la forme d'une relation de dépendance entre les forces de serrage et la position courante du dispositif de serrage ; et
- dérivation de grandeurs caractéristiques du cycle de serrage de la variation des forces de serrage en fonction de la course.

**2.** Procédé selon la revendication 1, **caractérisé en ce que** les mesures sont effectuées chaque fois pendant un cycle de serrage ou pendant un cycle de mesure lors duquel le dispositif de serrage est déplacé à plus petite vitesse que lors du cycle de serrage.

**3.** Procédé selon une des revendications 1 ou 2, **caractérisé en ce que** la force de serrage avec laquelle le dispositif de serrage (3) serre l'outil et/ou la force de desserrage, force nécessaire pour desserrer l'outil serré, sont déterminées à partir du courant de moteur mesuré en utilisant un modèle dans lequel interviennent des paramètres physiques d'influence pertinents.

**4.** Procédé selon une des revendications 1 à 3, **caractérisé en ce que** la variation des forces de serrage en fonction du temps est déterminée.

**5.** Procédé selon la revendication 1, **caractérisé en ce que** la course de serrage du dispositif de serrage est évaluée en tant que mesure de la force de serrage respective.

**6.** Procédé selon une des revendications 1 à 5, **caractérisé en ce que** l'entraînement électrique (2) fonctionne avec une régulation.

**7.** Procédé selon la revendication 6, **caractérisé en**

ce qu'une régulation de position est effectuée lors de l'approche du dispositif de serrage (3) de l'outil, et qu' en un point défini du cycle de serrage il se produit une commutation vers une régulation de force ou vers une régulation de couple.

8. Procédé selon la revendication 7, **caractérisé en ce qu'**une commutation à la volée est effectuée entre régulation de position et régulation de force ou régulation de couple.

9. Procédé selon une des revendications 1 à 8, **caractérisé en ce qu'**est déterminé comme grandeur caractéristique du cycle de serrage le diamètre effectif du corps de serrage de l'outil en tant que point d'intersection des tangentes à deux courbes partielles de la variation des forces de serrage en fonction de la course.

10. Procédé selon la revendication 9, **caractérisé en ce que** le diamètre du corps de serrage mesuré est comparé avec une valeur de consigne.

11. Procédé selon une des revendications 1 à 10, **caractérisé en ce qu'**est déterminé comme grandeur caractéristique du cycle de serrage, par évaluation de la variation des forces de serrage en fonction de la course, en particulier d'un point de départ d'une augmentation des forces de serrage et de sa pente, si le corps de serrage présente des défauts ou des impuretés.

12. Procédé selon une des revendications 1 à 11, **caractérisé en ce que** sont déterminées comme grandeur caractéristique du cycle de serrage, à partir de la variation des forces de serrage en fonction de la course, des forces de frottement de glissement comme grandeur caractéristique des lubrifiants ou revêtements présents dans l'entraînement électrique (2) et dans le dispositif de serrage (3).

13. Procédé selon une des revendications 1 à 12, **caractérisé en ce que** sont déterminées comme grandeur caractéristique du cycle de serrage, à partir de la variation des forces de serrage en fonction de la course, des forces de frottement par adhérence comme grandeurs caractéristiques du blocage automatique de la mécanique du dispositif de serrage (3).

14. Procédé selon une des revendications 1 à 13, **caractérisé en ce qu'**un jeu entre un rotor de moteur formé par des masses mobiles de l'entraînement (2) et le dispositif de serrage (3) est utilisé pour augmenter la force de serrage par accélération du rotor de moteur sur le dispositif de serrage (3).

15. Système de serrage (1) pour actionner un dispositif de serrage (3) destiné à serrer un outil ou une pièce au moyen d'un entraînement électrique (2), dans lequel sont intégrés des dispositifs de mesure pour la mesure de courants de moteur et de positions de moteur au moyen desquels des cycles de serrage effectués avec le dispositif de serrage (3) peuvent être contrôlés, **caractérisé en ce que**

- les dispositifs de mesure permettent de mesurer aussi bien les courants de moteur que les positions de moteur ;
- il est prévu une unité d'évaluation au moyen de laquelle les courants de moteur peuvent être évalués en tant que mesure des forces de serrage, et les positions de moteur en tant que mesure d'une position courante du dispositif de serrage, sachant que
- une variation des forces de serrage en fonction de la course peut être déterminée sous la forme d'une relation de dépendance entre les forces de serrage et la position courante du dispositif de serrage ; et que
- des grandeurs caractéristiques du cycle de serrage peuvent être dérivées de la variation des forces de serrage en fonction de la course.

16. Système de serrage selon la revendication 15, **caractérisé en ce qu'**un diamètre effectif d'un corps de serrage, des défauts ou impuretés du corps de serrage et/ou des forces de frottement de glissement et/ou d'adhérence peuvent être déterminés en tant que grandeurs caractéristiques du cycle de serrage.

17. Système de serrage selon une des revendications 15 ou 16, **caractérisé en ce que** l'entraînement électrique (2) est un entraînement linéaire.

18. Système de serrage selon la revendication 16, **caractérisé en ce que** l'entraînement électrique (2) est un entraînement rotatif (2) avec une transmission.

19. Système de serrage selon la revendication 18, **caractérisé en ce qu'**une tige filetée est associée à l'entraînement électrique (2) en tant que transmission.

20. Système de serrage selon une des revendications 15 à 19, **caractérisé en ce que** les forces de serrage pour serrer l'outil avec le dispositif de serrage (3) sont générées avec le seul entraînement électrique (2).

21. Système de serrage selon une des revendications 15 à 19, **caractérisé en ce qu'**il est prévu des blocs-ressorts auxiliaires au moyen desquels une précontrainte est générée en plus des forces de serrage générées au moyen de l'entraînement électrique (2).

**22.** Système de serrage selon une des revendications 15 à 21, **caractérisé en ce qu'**un élément d'amortissement ou de suspension est disposé sur le rotor de moteur de l'entraînement (2) ou du dispositif de serrage (3).

# Fig. 1

# Fig. 2

12

# Fig. 3

Kraft

t₀      t₁        Zeit

# Fig. 4

Kraft

II

I

x₁   x₂    Weg

## Fig. 5

## Fig. 6

**Fig. 7a**

$v_{Mot} > 0$

$v_{sp} = 0$

Fr1

D

$m_{Mot}$ $F_{Mot}$

$m_{sp}$

Fr

**Fig. 7b**

$v = v_{Mot} = v_{sp} > 0$

Fr1

D

$m_{Mot}$

$m_{sp}$

$F_{Mot}$

Fr

**Fig. 7c**

$v = v_{Mot} = v_{sp} > 0$

Fr1

D

$m_{Mot}$

$m_{sp}$

$F_{Mot}$

Fr

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030014860 A
- DE 10101096 A1